# EUROPEAN PATENT SPECIFICATION

(11) **EP 0 527 479 B1**
(45) Date of publication and mention of the grant of the patent: **26.10.1994**
(21) Application number: 92113742.8
(22) Date of filing: 12.08.1992
(51) Int. Cl.: C03C 25/02

(54) **Apparatus for coating optical fiber or bundle of optical fibers with resin**
Vorrichtung zur Beschichtung von optischen Fasern oder Strängen von optischen Fasern mit Harz
Dispositif pour le revêtement de fibres optiques ou faisceaux de fibres optiques avec une résine

(30) Priority: 13.08.1991 JP 71520/91
(43) Date of publication of application: 17.02.1993
(73) Proprietor: THE FURUKAWA ELECTRIC CO., LTD., Tokyo (JP)
(72) Inventor: Kobayashi, Ichiro, c/o The Furukawa El. Co., Ltd., Chiyoda-ku, Tokyo (JP); Kobayashi, Hiroyuki, c/o The Furukawa El. Co. Ltd., Chiyoda-ku, Tokyo (JP)
(74) Representative: Füchsle, Klaus, Dipl.-Ing.

(56) References cited:
- EP-A- 0 177 345
- US-A- 3 622 290
- US-A- 3 791 807
- US-A- 4 374 161
- CHEMICAL ABSTRACTS, vol. 105, no. 6, August 1986, Columbus, Ohio, US; abstract no. 47693e, page 302 ; & JP-A-61 040 850 (FURUKAWA ELECTRIC CO.) 27 February 1986.

## Description

The present invention relates to an apparatus for coating an optical fiber or a bundle of optical fibers with resin.

A resin coating apparatus for coating an optical fiber or a bundle of optical fibers with resin comprises a resin tank and a resin coater. A resin stored in the resin tank is supplied to the resin coater so as to coat an optical fiber or a bundle of optical fibers with the resin. An inert gas such as a nitrogen gas is supplied under a pressurized condition to the resin tank so as to pressurize the resin in the resin tank. As a result, the resin is supplied to the resin coater. An optical fiber or a bundle of optical fibers is coated with the resin when passing through the coater. Then, the coated fiber or fiber bundle is passed through a resin curing device for the curing of the resin coating. The resin used for the coating is poured from a resin container into the resin tank. Also, where the resin is an ultraviolet curing resin, a UV irradiating device is used for curing the resin coating. On the other hand, where a thermosetting resin is used as the resin coating, a heating means is used for curing the resin coating.

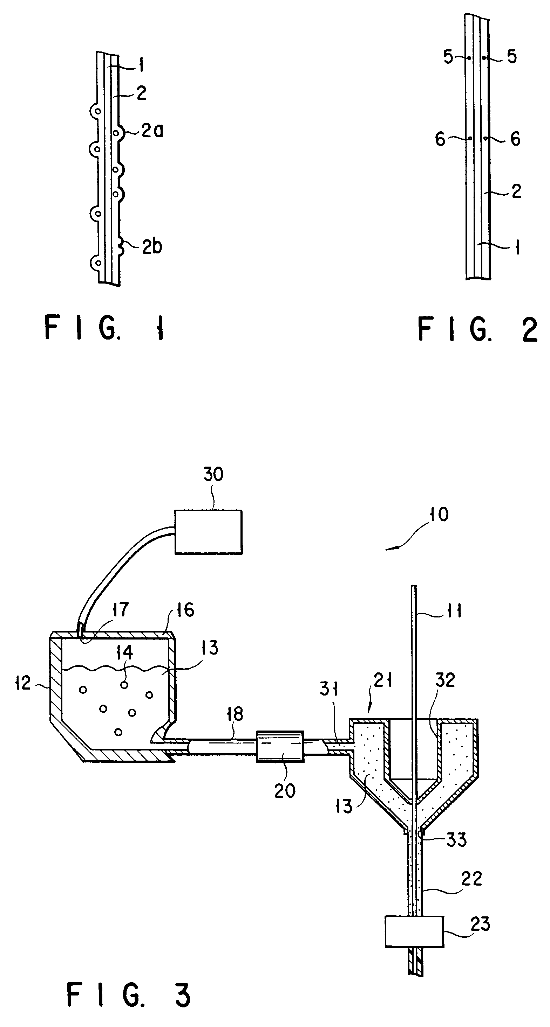

The conventional resin coating apparatus described above gives rise to serious problems. First of all, it is unavoidable for air to accompany the resin when the resin is poured from the resin container into the resin tank, with the result that a large number of bubbles are generated within the resin. These bubbles are transferred together with the resin into the resin coater. It follows that bubbles are contained in the resin coating which covers the outer surface of an optical fiber or bundle of optical fibers. If large bubbles are contained in the resin coating, the outer circumferential surface of a resin coating 2 of an optical fiber 1 (or bundle of optical fibers) is partially swollen to form a convex portion 2a, as shown in Fig. 1. Alternatively, the bubble is collapsed when the resin coating is heated in the subsequent curing step, with the result that a hole 2b is formed in the resin coating 2. Naturally, the presence of the convex portion 2a or the hole 2b impairs the appearance of the resin coating. Even if the bubbles are not so large as to impair the appearance of the resin coating, a difficulty is brought about where the optical fiber is used under an atmosphere of low temperatures. Specifically, the optical fiber is bent at the bubble portion by the shrinkage of the resin coating at low temperature, leading to a serious transmission loss.

In addition, foreign matters tend to enter the resin in the cases where the lid of the resin container is opened and where a suction pipe is inserted into the resin container for supplying the resin into the resin tank. Further, the resin is kept at about 30 to 80°C in the coating step. What should be noted is that the resin tends to be partly gelled in this step. It follows that, where an optical fiber or bundle of optical fibers is coated with the resin, a foreign matter 5 or a gelled portion 6 is contained in the resin coating 2, as shown in Fig. 2. The presence of the foreign matter 5 or the gelled portion 6 tends to markedly impair the transmission characteristics and mechanical properties of the optical fiber.

An apparatus for pressure-coating fibers is known from US-A-4 374 161 and includes a resin coating means made of porous material which directs the fluid coating material radially towards the fiber to reduce the amount of bubbles entrapped in the coating.

An object of the present invention is to provide an apparatus for coating an optical fiber or a bundle of optical fibers with resin, said apparatus being capable of suppressing the air entry into the resin coating so as to prevent bubbles from being formed in the resin coating and, thus, to prevent the appearance of the resin coating from being impaired and to prevent the transmission characteristics of the optical fiber from being deteriorated.

This object is solved according to the present invention by an apparatus for coating an optical fibre including the features of claim 1.

Preferred embodiments are the subject matter of the dependent claims.

An object of the present invention in a preferred embodiment is the prevention of the transmission characteristics and mechanical properties of the optical fiber or bundle of optical fibers from being lowered by the foreign matter or gelled portion contained in the resin coating, as will be explained hereinafter.

This invention can be more fully understood from the following detailed description when taken in conjunction with the accompanying drawings, in which:
Fig. 1 is a cross sectional view showing an optical fiber covered with a resin coating formed by the conventional technique, bubbles being present in said resin coating;
Fig. 2 is a cross sectional view showing an optical fiber covered with a resin coating formed by the conventional technique, foreign matters and gelled portions being present in said resin coating;
Fig. 3 schematically shows a resin coating apparatus according to one embodiment of the present invention;
Fig. 4 shows how resin is poured into a resin tank in the apparatus shown in Fig. 3;
Fig. 5 is an oblique view showing in detail the filter device included in the apparatus shown in Fig. 3;
Fig. 6 is a graph showing the relationship between the light transmission loss and temperature with respect to an optical fiber covered with a resin coating formed by the apparatus of the present invention and an optical fiber covered with a resin coating formed by the conventional apparatus; and
Fig. 7 is a graph showing the relationship between the size of the resin-passing hole formed in a filter and the rate of breakage and the relationship between the size of the resin-passing hole and the light transmission loss.

Fig. 3 schematically shows a resin coating apparatus 10 according to one embodiment of the present invention. As shown in the drawing, the apparatus 10 comprises a resin tank 12 and a resin coater 21. Resin 13 stored in the tank 12 is supplied to the resin coater 21 so as to coat an optical fiber 11 with the resin 13. Of course, a bundle of optical fibers can be coated with the resin 3 by the apparatus 10, though the following description covers the case where the optical fiber 11 is covered with the resin 13.

A lid 16 is removably mounted to close the upper opening of the resin tank 12. A gas inlet port 17 is formed in the lid 16. A pressurized inert gas such as a nitrogen gas or air (when the resin is an ultraviolet curing resin, air is preferable since oxygen of air prevents gelling of resin.) is supplied from a gas supply source 30 into the tank 12 through the gas inlet port 17, with the result that the resin 13 within the tank 12 is moved within a pipe 18 toward the resin coater 21.

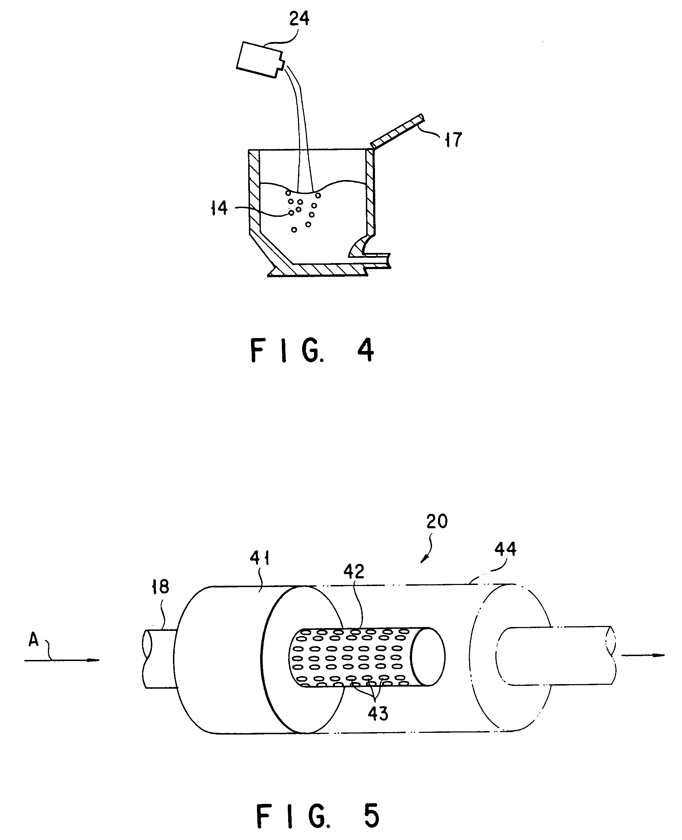

As shown in Fig. 4, the resin 13 is poured from a resin container 24 into the resin tank 12 by opening the lid 16. In this step, air is introduced into the resin 13 to form bubbles 14 within the resin 13. It is desirable to use resin curable upon irradiation with an ultraviolet light or a thermosetting resin, which is liquid at room temperature.

A filter device 20, which is described in detail later, is disposed midway of the pipe 18 such that the resin 13 passes through the filter device 20 before entering the resin coater 21.

The resin coater 21 is provided with an inlet port 31 through which the resin 13 passing within the pipe 18 enters the coater 21, a nipple 32 disposed in the central portion of the resin coater 21 for supplying an optical fiber 11 into the coater 21, and a die 33 disposed in the lower portion of the resin coater 21 for coating the optical fiber 11 with resin so as to form a resin coating 22.

A resin curing device 23 is disposed downstream of the resin coater 21. The device 23 is provided with an ultraviolet light irradiating section in the case of using an ultraviolet curing resin, or with a heating section in the case of using a thermosetting resin. The optical fiber 11 covered with the resin coating 22, which passes through the die 33, is introduced into the resin curing device 23 for curing the resin coating 22.

As shown in Fig. 5, the filter device 20 comprises a cylindrical filter 42 having a bottom and provided with a large number of resin-passing holes 43, a filter-fixing tool 41, and a container 44. The resin-passing holes 43 have an average diameter not larger than 100 µm.

In the step of pouring the resin 13 from the resin container 24 into the resin tank 12, air is introduced into the resin 13 so as to form a large number of bubbles 14, as described previously. These bubbles 14 are divided into finer bubbles by the filter device 20. Where the resin-passing holes 43 have an average diameter not larger than 100 µm, the bubbles formed in the resin tank 12 are divided into sufficiently fine bubbles, making it possible to prevent substantially completely the resin coating 22 from being partially swollen by the bubbles 14 or from bearing holes caused by the rupture of the bubbles. It follows that the resin coating exhibits a satisfactory appearance. Also, where the optical fiber 1 is used under an atmosphere of low temperatures, the optical fiber 1 is prevented from being bent by the shrinkage of the resin coating. It follows that it is also possible to prevent substantially completely the transmission characteristics of the optical fiber from being impaired by the presence of bubbles in the resin coating.

It has been experimentally confirmed that the filter device 20 performs satisfactory functions where the average diameter of the resin-passing holes 43 are not larger than 100 µm. Specifically, it has been experimentally confirmed that, where the average diameter of the resin-passing holes is larger than 100 µm, it is difficult to divide the bubbles formed in the resin tank 12 into sufficiently fine bubbles, with the result that the appearance of the resin coating 22 is impaired. Alternatively, the transmission characteristics of the optical fiber are impaired under low temperatures.

Three kinds of samples were prepared in the experiment noted above including samples in which optical fibers were covered with resin coatings using filter devices comprising resin-passing holes having average diameters of 100 µm and 500 µm, respectively, and another sample in which a filter device was not used for coating the optical fiber with resin. The sample prepared without using a filter device was poor in the appearance. However, the other samples in the cases of using filter devices comprising resin-passing holes having average diameters of 100 µm and 500 µm exhibited satisfactory appearances. This indicates that it suffices for the average diameter of the resin-passing holes to be not larger than 500 µm, as far as the appearance of the resin coating is concerned.

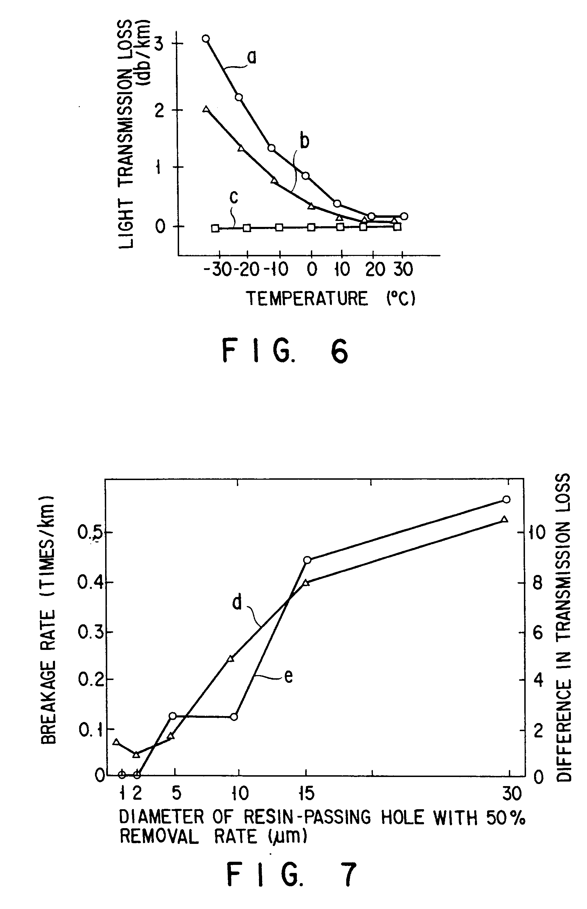

The relationship between the temperature and the light transmission loss was measured for each of these three samples, with the results as shown in Fig. 6. Curve "a" shown in Fig. 6 denotes the sample prepared without using the filter device. On the other hand, curves "b" and "c" represent the samples prepared by using the filter devices comprising the resin-passing holes having average diameters of 500 µm and 100 µm, respectively. As apparent from curve "c", the light transmission loss is not increased even under such a low temperature as -30°C, when it comes to the sample prepared by using the filter device comprising the resin-passing holes having an average diameter of 100 µm. However, the light transmission loss is markedly increased under low temperatures in the other samples, as shown in Fig. 6. It follows that it is necessary for the average diameter of the resin holes of the filter device to be not larger than 100 µm in view of both the appearance of the resin coating and the transmission characteristics of the optical fiber.

It is desirable for the average diameter of the resin-passing holes of the filter 42 to be not larger than 2 µm. It should be noted in this connection that a foreign matter tends to enter the resin 13 in the step of, for example, opening the lid 16 of the resin tank 12. Also, while the resin 13 is kept warm, the resin 13 is likely to be gelled to form a gel portion. Where the resin-passing holes 43 of the filter device 42 have an average diameter not larger than 2 µm, it is possible to remove these foreign matter and gel portion from the resin entering the resin coater. In the case of using a filter device comprising the resin-passing holes 43 having an average diameter not larger than 2 µm for removing the foreign matter and gelled portion, it is desirable to dispose the filter device 42 immediately before the resin coater 21 so as to prevent the resin 13 which has passed through the filter device 43 from being gelled again before entering the resin coater 21.

It has been experimentally confirmed that it is impossible to effectively remove the foreign matter and gelled portion from the resin 13 where the average diameter of the resin-passing holes 43 is larger than 2 µm. Specifically, a resin containing an aluminum powder passing through a mesh of 100 µm was passed through filter devices comprising resin-passing holes having average diameters of 1 to 30 µm. The resin thus prepared was used for coating 30 km of an optical fiber. A double die type resin coater was used for forming a primary resin coating having an outer diameter of 0.18 mm and, then, a secondary resin coating having an outer diameter of 0.24 mm.

Each of the optical fiber samples thus prepared was subjected to a 1% screening so as to measure the breakage rate of the sample. The "1% screening" noted above denotes a proof test which is conducted by applying a load in a manner to permit 1% elongation of the optical fiber. Further, 2 km of a test piece was taken from each of the optical fiber samples and wound about a stainless steel bobbin having an outer diameter of 300 mm with a tension of 10g or 70g. Under this condition, a difference in the transmission loss (increased value of transmission loss) of light emitted from a laser light source was measured five times at a wavelength of 1.57 µm. Fig. 7 shows the breakage rate and the difference in the transmission loss obtained in this experiment. In the graph of Fig. 7, the diameter of the resin-passing hole of the filter device with removal rate of 50%, i.e., the average diameter of the resin-passing holes, is plotted on the abscissa. On the other hand, the breakage rate and the difference in the transmission loss are plotted on the two ordinates, respectively. Curve "d" in Fig. 7 denotes the breakage rate, with curve "e" denoting the difference in the transmission loss. The difference in the transmission loss represents the difference between the tension of 70g and the tension of 10g.

Fig. 7 clearly shows that the breakage rate and the difference in the transmission loss can be markedly suppressed in the case of using a filter device comprising resin-passing holes having an average diameter not larger than 2 µm, and that the values of these breakage rate and the difference in the transmission loss are increased where the average diameter noted above is larger than 2 µm. It follows that it is necessary to use a filter device comprising resin-passing holes having an average diameter not larger than 2 µm in order to maintain satisfactory transmission characteristics and mechanical characteristics of an optical fiber by removing the foreign matter and gelled component.

An additional experiment was conducted in an attempt to examine the surface state of the resin coating. In this experiment, two coated optical fiber samples each having an outer diameter of 400 µm (the diameter of the fiber itself was 125 µm) were prepared by coating optical fibers with an urethane-acrylic resin curable upon irradiation with an ultraviolet light over a length of 100 km. In the coating step, the optical fiber was moved at a speed of 2 m/sec. The resin was passed through resin-passing holes having an average diameter of 2 µm in preparing one of the samples, and a filter device was not used in preparing the other sample.

These samples were examined with a convex portion-detecting apparatus so as to detect convex portions formed in these samples. The sample prepared without using a filter device was found to have 48 convex portions in contrast to only 13 convex portions found in the sample prepared by using a filter device comprising resin-passing holes having an average diameter of 2 µm. It follows that the use of a filter device comprising resin-passing holes having an average diameter not larger than 2 µm permits decreasing the swelling of the resin coating caused by the presence of bubbles to about 1/4.

A cylindrical filter device is used in the embodiment described above. However, it is not absolutely necessary to use a cylindrical filter device. For example, a plate-like filter device may also be used in the present invention. Further, the resin coaters of various types can also be used in the present invention in addition to the resin coater used in the embodiment described above.

Reference signs in the claims are intended for better understanding and shall not limit the scope.

## Claims

1. An apparatus for coating an optical fiber or a bundle of optical fibers with resin, comprising a resin container (12); resin coating means (21) for coating an optical fiber or a bundle of optical fibers with the resin supplied from the resin container (12); and filter means (20) disposed between the resin container (12) and the resin coating means (21) for filtering the resin particles passing therethrough, said filter means comprising a plurality of resin-passing holes (43) having an average diameter not larger than 100 µm.

2. The apparatus according to claim 1, **characterized by** said filter means comprising a plurality of resin-passing holes (43) having an average diameter not larger than 2 µm.

3. The apparatus according to claim 1, **characterized by** further comprising means (23) for curing the resin coating formed by said resin coating means (21).

4. The apparatus according to claim 1, **characterized in that** said resin coating means (21) comprises an inlet port (31) for introducing said resin, a nipple-shaped recess (32) for supplying and guiding an optical fiber or a bundle of optical fibers into the resin coating means (21), and a die member (33) for coating the optical fiber or bundle of optical fibers with the resin coating and discharging the optical fiber or bundle of optical fibres from the resin coating means.

5. The apparatus according to claim 1, **characterized in that** said filter means (20) has a cylindrical body.

## Patentansprüche

1. Vorrichtung zum Beschichten einer optischen Faser oder eines Bündels optischer Fasern mit Harz, umfassend einen Harzbehälter (12); eine Harzbeschichtungsmaschine (21) zum Beschichten einer optischen Faser oder eines Bündels optischer Fasern mit dem vom Harzbehälter (12) zugeführten Harz; und eine zwischen dem Harzbehälter (12) und der Harzbeschichtungseinrichtung (21) angeordnete Filtereinrichtung (20) zum Filtern der dort hindurchtretenden Harzpartikel, die Filtereinrichtung umfassend eine Vielzahl von Harzdurchtrittslöchern (43), die einen durchschnittlichen Durchmesser nicht größer als 100 µm besitzen.

2. Vorrichtung nach Anspruch 1, **dadurch gekennzeichnet**, daß die Filtereinrichtung eine Vielzahl von Harzdurchtrittslöchern (43) umfaßt, die einen durchschnittlichen Durchmesser nicht größer als 2 µm besitzen.

3. Vorrichtung nach Anspruch 1, **dadurch gekennzeichnet**, daß ferner eine Einrichtung (23) zum Aushärten der durch die Harzbeschichtungseinrichtung (21) gebildeten Harzbeschichtung vorgesehen ist.

4. Vorrichtung nach Anspruch 1, **dadurch gekennzeichnet**, daß die Harzbeschichtungseinrichtung (21) eine Einlaßöffnung (31) zum Einleiten des Harzes, eine nippelförmige Ausnehmung (32) zum Zuführen und Führen einer optischen Faser oder eines Bündels von optischen Fasern in die Harzbeschichtungseinrichtung (21), und ein Ziehdüsenteil (33) zum Beschichten der optischen Faser oder des Bündels optischer Fasern mit der Harzbeschichtung und zum Austragen der optischen Faser oder des Bündels optischer Fasern aus der Harzbeschichtungseinrichtung umfaßt.

5. Vorrichtung nach Anspruch 1, **dadurch gekennzeichnet**, daß die Filtereinrichtung (20) einen zylindrischen Körper besitzt.

## Revendications

1. Appareil pour recouvrir de résine une fibre optique ou un faisceau de fibres optiques, qui comprend un réservoir de résine (12), des moyens de dépôt de résine (21) destinés à recouvrir une fibre optique ou un faisceau de fibres optiques avec la résine envoyée du réservoir de résine (12), et des moyens de filtrage (20) placés entre le réservoir de résine (12) et les moyens de dépôt de résine (21) pour filtrer les particules de résine qui les traversent, lesdits moyens de filtrage comprenant une pluralité de trous (43) de passage de résine dont le diamètre moyen n'excède pas 100 µm.

2. Appareil selon la revendication 1, caractérisé par le fait que lesdits moyens de filtrage comprennent une pluralité de trous (43) de passage de résine dont le diamètre moyen n'excède pas 2 µm.

3. Appareil selon la revendication 1, caractérisé par le fait qu'il comprend en outre des moyens (23) pour durcir le revêtement de résine formé par lesdits moyens (21) de dépôt de résine.

4. Appareil selon la revendication 1, dans lequel lesdits moyens (21) de dépôt de résine comprennent une embouchure d'entrée (31) pour introduire ladite résine, un évidement (32) en forme de buse pour amener et guider une libre optique ou un faisceau de fibres optiques dans lesdits moyens (21) de dépôt de résine, et un élément formant filière (33) destiné à recouvrir la fibre optique ou le faisceau de fibres optiques avec le revêtement de résine et à évacuer la fibre optique ou le faisceau de fibres optiques desdits moyens (21) de dépôt de résine.

5. Appareil selon la revendication 1, caractérisé par le fait que lesdits moyens de filtrage (20) présentent un corps cylindrique.
